# EUROPEAN PATENT APPLICATION

(11) **EP 3 866 249 A1**
(43) Date of publication of application: **18.08.2021**
(21) Application number: 19873737.1
(22) Date of filing: 16.10.2019
(51) Int. Cl.: H01M 10/12, H01M 2/10, H01M 2/28, H01M 4/14, H01M 4/20, H01M 4/68, H01M 4/73, H01M 4/74

(54) **LEAD-ACID BATTERY**

(30) Priority: 16.10.2018 JP 2018194800
(71) Applicant: GS Yuasa International Ltd., Kisshoin, Minami-ku, Kyoto-shi, Kyoto 601-8520 (JP)
(72) Inventor: Muhammad Syahid Fitri Bin Azahar, Kyoto-shi, Kyoto 601-8520 (JP); IMAMURA, Tomohiro, Kyoto-shi, Kyoto 601-8520 (JP)
(74) Representative: Isarpatent
(86) International application number: PCT/JP2019/040717
(87) International publication number: WO 2020/080421

(57) **Abstract**

A current collector included in a positive electrode plate and/or a negative electrode plate of a lead-acid battery has a frame rib and inner ribs inside the frame rib. The frame rib includes an upper element, a lower element, and a pair of side elements coupling these elements. The inner ribs include a longitudinal rib, which extends in a first direction from the upper element toward the lower element, and a transverse rib. A striped pattern of a metallic fibrous structure is seen in each of a first cross-section perpendicular to the first direction of the side element and a second cross-section of the longitudinal rib. An outer peripheral region of the first cross-section is made up of a first portion in which the fibrous structure extends along a contour of the first cross-section and a second portion except for the first portion, and the second portion is made up of a 2A portion disposed inside the frame rib and a 2B portion disposed outside the frame rib.An outer peripheral region of the second cross-section is made up of a first portion in which the fibrous structure extends along a contour of the second cross-section and a second portion except for the first portion. A percentage R1 of a length of a contour corresponding to the 2A portion to a total length of the contour of the first cross-section is less than 25%, and a percentage R2 of a length of a contour corresponding to the second portion to a total length of the contour of the second cross-section is less than 50%.

## Description

### TECHNICAL FIELD

The present invention relates to a lead-acid battery.

### BACKGROUND ART

Lead-acid batteries are used in various applications, including automotive, industrial, and other applications. A lead-acid battery is provided with an electrode plate group in which a positive electrode plate and a negative electrode plate are alternately stacked with a separator therebetween. The electrode plate is made up of a current collector and an electrode material held by the current collector. The current collector is formed by punching, expanding, casting, or the like.

For example, Patent Document 1 proposes a valve regulated lead-acid battery including: a positive current collector, a positive active material, a negative current collector, a negative active material, and a liquid holding material, in which the positive current collector is a punched current collector obtained by punching a rolled sheet of lead alloy, and the average layer interval of a layered current collector structure in a cross-section in the thickness direction of the current collector is 25 µm or more and 180 µm or less.

### PRIOR ART DOCUMENT

### PATENT DOCUMENT

Patent Document 1: WO 2015/056417

### SUMMARY OF THE INVENTION

### PROBLEMS TO BE SOLVED BY THE INVENTION

In lead-acid batteries, the life performance may deteriorate due to the degradation of the positive electrode plate and the negative electrode plate. Possible degradation modes of the electrode plates are, for example, sulfation, the dropping or softening of the positive electrode material, the corrosion of the current collector, the generation of cracks in the negative electrode plate, and the like.

Meanwhile, the state of the current collector varies greatly depending on the processing method and processing conditions. When the state of the current collector is different, adhesion to the electrode material and corrosiveness are also different. Thus, depending on the state of the current collector, sufficient life performance may not be obtained. In addition, the life performance varies greatly depending on charge-discharge conditions.

### MEANS FOR SOLVING THE PROBLEMS

One aspect of the present invention relates to a lead-acid battery including: a positive electrode plate; a negative electrode plate; and an electrolyte solution. At least one electrode plate selected from the group consisting of the positive electrode plate and the negative electrode plate includes a current collector and an electrode material held by the current collector. The current collector has a frame rib, a lug provided on the frame rib, and inner ribs inside the frame rib. The frame rib includes an upper element continuous with the lug, a lower element facing the upper element, and a pair of side elements coupling the upper element with the lower element. The inner ribs include a longitudinal rib extending in a first direction from the upper element toward the lower element, and a transverse rib extending in a second direction from one of the side elements toward the other of the side elements. A striped pattern of a metallic fibrous structure is seen in each of a first cross-section perpendicular to the first direction of the side element of the frame rib and a second cross-section perpendicular to the first direction of the longitudinal rib. An outer peripheral region of the first cross-section is made up of a first portion in which the fibrous structure extends along a contour of the first cross-section and a second portion except for the first portion. The second portion is made up of a 2A portion disposed inside the frame rib and a 2B portion disposed outside the frame rib. An outer peripheral region of the second cross-section is made up of a first portion in which the fibrous structure extends along a contour of the second cross-section and a second portion except for the first portion. A percentage R1 of a length of a contour corresponding to the 2A portion to a total length of the contour of the first cross-section is less than 25%. A percentage R2 of a length of a contour corresponding to the second portion to a total length of the contour of the second cross-section is less than 50%.

### ADVANTAGES OF THE INVENTION

According to the lead-acid battery in the above aspect of the present invention, high life performance can be obtained in a charge-discharge cycle.

### BRIEF DESCRIPTION OF THE DRAWINGS

Fig. 1A is a plan view showing an appearance of a current collector used for a lead-acid battery according to one embodiment of the present invention.
Fig. 1B is a plan view showing an appearance of a current collector used in a lead-acid battery according to another embodiment.
Fig. 2A is a cross-sectional photograph of a cross-section (second section C2) of a longitudinal rib perpendicular to a first direction.
Fig. 2B is a conceptual view of the second section C2.
Fig. 3 is a cross-sectional photograph of a section G2 of the inner rib perpendicular to the second direction.
Fig. 4 is a cross-sectional conceptual view showing the progress of corrosion of the inner rib.
Fig. 5 is a perspective view showing an external appearance of a lead-acid battery according to one embodiment of the present invention.
Fig. 6 is a schematic view of a cross-section perpendicular to the first direction near a side element of a positive electrode plate.

### MODE FOR CARRYING OUT THE INVENTION

A lead-acid battery according to one embodiment of the present invention includes a positive electrode plate, a negative electrode plate, and an electrolyte solution. At least one electrode plate selected from the group consisting of the positive electrode plate and the negative electrode plate includes a current collector and an electrode material held by the current collector. The current collector has a frame rib, a lug provided on the frame rib, and inner ribs inside the frame rib. The frame rib includes an upper element continuous with the lug, a lower element facing the upper element, and a pair of side elements coupling the upper element and the lower element. The inner rib includes a longitudinal rib extending in a first direction from the upper element toward the lower element, and a transverse rib extending in a second direction from one side element toward the other side element. The first direction is a direction parallel to the side element, and the second direction is a direction parallel to the upper element and the lower element.

The longitudinal rib may extend parallel to the side elements or may extend obliquely with respect to the side elements. The longitudinal rib may be straight, curved, or slightly bent. That is, the longitudinal rib may only extend so that a vector in the first direction is larger than a vector in the second direction.

The transverse rib may extend parallel to the upper or lower element and may extend obliquely with respect to the upper or lower element. The transverse rib may be straight, curved, or slightly bent. That is, the transverse rib may only extend so that a vector in the second direction is larger than a vector in the first direction.

In each of a first cross-section perpendicular to the first direction of the side element of the frame rib (also referred to as a longitudinal frame rib) of the current collector (i.e., a cross-section parallel to the upper element and parallel to the thickness direction) and a second cross-section perpendicular to the first direction of the longitudinal rib (i.e., a cross-section parallel to the upper element and parallel to the thickness direction), a striped pattern of a metallic fibrous structure is seen. Note that the first cross-section and the second cross-section may also be referred to as a section C1 and a section C2, respectively. The outer peripheral region of the section C1 is made up of a first portion in which the fibrous structure extends along the contour of the section C1 and a second portion except for the first portion. However, the second portion is made up of a 2A portion disposed inside the frame rib and a 2B portion disposed outside the frame rib The outer peripheral region of the section C2 is made up of a first portion in which the fibrous structure extends along the contour of the section C2 and a second portion except for the first portion. The contour of the section C1 means a line corresponding to the outer surface of the longitudinal frame rib. The contour of the section C2 means a line corresponding to the outer surface of the longitudinal rib. The outer peripheral region of the section C1 and the outer peripheral region of the section C2 are a peripheral region along the contour of the section C1 and a peripheral region along the contour of the section C2, respectively, and in each cross-section, the outer peripheral region is a peripheral region having a depth of at least 55 µm or more from a line corresponding to the outer surface, and preferably having a depth of 100 µm or more. In the second portion in each cross-section, no striped pattern may be observed, and a striped pattern extending in the depth direction of the outer peripheral region may be observed.

Here, a percentage R1 of a length of a contour corresponding to the 2A portion to a total length of the contour of the section C1 is less than 25%, and a percentage R2 of a length of a contour corresponding to the second portion to a total length of the contour of the section C2 is less than 50%. When the percentages R1 and R2 are controlled in this way, the cross-sections perpendicular to the fiber length of the fibrous structure are hardly exposed on the outer surfaces of the outer peripheral regions of the section C1 and the section C2. The cross-section perpendicular to the fiber length of the fibrous structure has many grain boundaries. The first portion and the second portion are different in the form of progress of corrosion.

As described above, in the above aspect of the present invention, the percentage R1 of the 2A portion in the section C1 of the longitudinal frame rib is set to less than 25%, and the percentage R2 of the second portion in the section C2 of the longitudinal rib is set to less than 50%, so that the life performance in the charge-discharge cycle can be improved. A first reason for the improvement in life performance is considered to be that the elongation of the current collector during charge and discharge is reduced. A second reason is considered to be that between the longitudinal frame rib and the longitudinal rib adjacent to the longitudinal frame rib, the distance between the ribs and the electrode material is close, so that a charge-discharge reaction easily occurs to the internal electrode material. A third reason is considered to be that an increase in the contact area between the current collector and the electrode material enhances the conductivity therebetween and improves the charge-discharge performance.

The first reason will be explained in more detail.

In general, the corrosion of the current collector proceeds preferentially in the cross-section perpendicular to the fiber length of the fibrous structure exposed to the outer surface. On the outer surface of the first portion of the outer peripheral region, the fibrous metallic structure extends in the surface direction of the inner rib. That is, the crystal grain boundary extends longer in the surface direction of the inner rib than in the depth direction of the inner rib. Therefore, a corrosion layer formed in the first portion of the outer peripheral region is formed along the surface direction of the inner rib and is hardly formed to a deep position inside the inner rib. The corrosion layer formed along the outer surface of the first portion of the outer peripheral region has a low bonding strength with the current collector (inner rib). Thus, when gas is generated at the interface between the current collector (the outer surface of the first portion of the outer peripheral region) and the corrosion layer, the corrosion layer is relatively easily peeled off from the current collector. On the other hand, on the outer surfaces of the 2A portion of the outer peripheral region of the longitudinal frame rib and the second portion of the outer peripheral region of the longitudinal rib, the fibrous metallic structure extends in the depth direction of the inner rib.

In other words, the grain boundary extends longer in the depth direction of the inner rib than in the surface direction of the inner rib. Hence the corrosion layer formed along the outer surfaces of the 2A portion of the outer peripheral region of the longitudinal frame rib and the second portion of the outer peripheral region of the longitudinal rib has a high bonding strength with the current collector (inner rib). Even when gas is generated at the interface between the 2A portion of the outer peripheral region of the longitudinal frame rib and the second portion of the outer peripheral region of the longitudinal rib and the corrosion layer, the corrosion layer is hardly peeled off from the current collector, and stress is applied to the inner rib to deform the inner rib. That is, in the 2A portion of the outer peripheral region of the longitudinal frame rib and the second portion of the outer peripheral region of the longitudinal rib in the outer peripheral region where the fibrous metallic structure extends in the depth direction of the inner rib, the corrosion layer is hardly peeled off, and stress is easily received from the corrosion layer, which causes the deformation of the current collector, as compared to the first portion in which the fibrous metallic structure extends in the surface direction of the inner rib. Thus, even when the amount of corrosion is the same, the smaller the percentages R1 and R2, the more the elongation of the current collector is reduced. In particular, in the positive electrode plate, during overcharge, the corrosion of the current collector easily proceeds, and the current collector remarkably elongates. Even in such a case, by controlling the percentage R1 of the 2A portion and the percentage R2 of the second portion to the above ranges, the elongation in the longitudinal frame rib and the longitudinal rib of the current collector can be reduced, thereby preventing the positive electrode material from falling-off.

On the other hand, in the cross-section (hereinafter also referred to as a section G1) perpendicular to the second direction of the upper element and the lower element of the frame rib (hereinafter, the upper element and the lower element of the frame rib are also referred to as transverse frame ribs) and the cross-section (hereinafter also referred to as a section G2) perpendicular to the second direction of the transverse rib, a striped pattern of a metallic fibrous structure is hardly seen, and generally, a cross-section perpendicular to the fiber length of fibrous structure is seen. That is, the outer peripheral region of the section G1 usually has almost the entire circumference corresponding to the second portion in the section C1, and the outer peripheral region of the section G2 usually has almost the entire circumference corresponding to the second portion in the section C2. That is, almost the entire circumference of the outer peripheral regions of the sections G1 and G2 is made of a fibrous structure elongating in the second direction. Therefore, in the outer peripheral regions of the sections G1 and G2, the elongation of the current collector is reduced even when the amount of corrosion is the same.

The reason why the elongation of the current collector differs depending on the rates of the 2A portion and the second portion is considered to be as follows:
In the first portion, the corrosion of the longitudinal rib easily proceeds shallow, and the elongation of the current collector due to the shallow corrosion is small. On the other hand, in the 2A portion of the longitudinal frame rib and the second portion of the longitudinal rib, the corrosion easily proceeds deep in a wedge shape into the longitudinal frame rib and the longitudinal rib, and the elongation of the current collector due to the deep corrosion tends to increase. In the positive electrode plate, the corrosion of the current collector is more likely to proceed particularly during overcharge, so that the current collector elongates remarkably.

In contrast, in the above embodiment of the present invention, by setting the percentage R1 of the 2A portion of the longitudinal frame rib to less than 25% and the percentage R2 of the second portion of the longitudinal rib to less than 50%, the progress of corrosion is made more uniform throughout current collector. It is conceivable that such homogenization of corrosion prevents the uneven distribution of the corroded portion and thus reduces the elongation of the current collector in one direction.

When only one of the percentages R1 and R2 is controlled so as to satisfy the above ranges, the life performance in the charge-discharge cycle is improved to some extent as compared to a case where neither the percentage R1 nor the percentage R2 satisfies the above ranges. However, when both the percentage R1 and the percentage R2 are controlled within the above ranges as in the above aspect of the present invention, an effect is obtained, which is higher than an effect obtained by adding the effect obtained when only one of the percentages is controlled so as to satisfy the above range. Although the details of the reason for this are not clear, when one of the percentages R1 and R2 is controlled within the above range, the degree of progress of corrosion is considered to be made uniform individually in the frame rib and the inner rib. In contrast, when the percentages R1 and R2 are controlled within the above ranges in both the frame rib and the inner rib, the degree of progress of corrosion is considered to be made uniform throughout the current collector. As a result, the effect of reducing the elongation in each of the frame rib and the inner rib is considered to be exerted synergistically.

In the longitudinal frame rib, the 2B portion also has the same metallic structure as the 2A portion. However, since the electrode material is not usually supported on the 2B portion, a charge-discharge reaction of the current collector is less likely to occur than in the 2A portion, and thus corrosion is less likely to occur. Further, even when the 2B portion is corroded, the 2B portion is not in contact with the electrode material, so that it is not necessary to consider the falling-off of the electrode material. Accordingly, for the frame rib, the elongation of the current collector can be controlled by controlling the percentage R1 of the 2A portion.

Here, in the longitudinal frame rib and the longitudinal rib, the percentage R1 of the 2A portion and the percentage R2 of the second portion can be controlled intentionally. It is also possible to deform the frame rib and the longitudinal rib so as to crush the second portion even when the percentage of the second portion is originally large in the longitudinal frame rib and the longitudinal rib. For example, when the longitudinal frame rib and the longitudinal rib are to be deformed by pressing, the percentages R1 and R2 can be arbitrarily controlled by the speed of a press, the pressure of the press, the shape of the die, or the like. That is, deforming the longitudinal frame rib and the longitudinal rib by pressing is not a sufficient condition for decreasing the percentages R1 and R2, and it is necessary to appropriately control the pressing condition. When the percentages R1 and R2 become small, the elongation of the current collector during charge and discharge (in particular, due to the use that causes overcharge in the positive electrode plate) is reduced, and the falling-off of the electrode material is prevented. The present invention has been completed on the basis of these new findings.

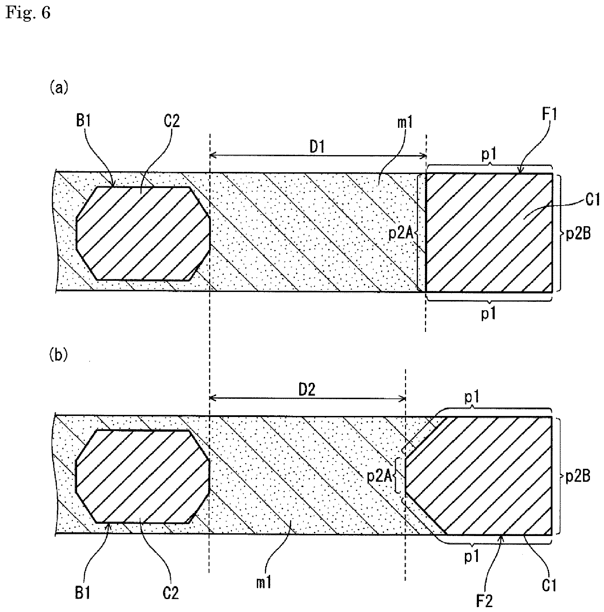

Next, the second reason will be described with reference to Fig. 6. Figs. 6(a) and 6(b) are schematic views of a cross-section perpendicular to the first direction of the frame rib near the side element of the positive electrode plate. (a) shows an example where the percentage R1 of the second portion is 25% or more, and (b) shows an example where the percentage R1 is less than 25%. A longitudinal frame rib F1 in (a) and a longitudinal frame rib F2 in (b) each have a first cross-section (section C1) perpendicular to the first direction. The outer peripheral region of the section C1 includes a first portion p1 and a second portion made up of a 2A portion p2A and a 2B portion p2B.

Referring to Figs. 6(a) and 6(b), in (b) where the percentage R1 of the 2A portion p2A is low as less than 25% as compared to (a) where the percentage R1 is high because the 2A portion p2A is made small so as to be covered with the first portion p1, the longitudinal frame rib F2 protrudes inward (to the electrode material m1 side). Therefore, the distance D2 between the longitudinal frame rib F2 and the adjacent longitudinal rib B1 in (b) is shorter than the distance D1 between the longitudinal frame rib F1 and the adjacent longitudinal rib B1 in (a). That is, the distance between an electrode material m1 existing between the longitudinal frame rib F2 and the longitudinal rib B1 in (b) and the current collector is shorter than in the case of (a). It is thus conceivable that the charge-discharge reaction is more likely to occur up to the internal electrode material m1, and the life performance is improved.

The third reason will be described. As shown in Fig. 6, the contact area between the longitudinal frame rib F2 and the electrode material m1 in (b) is larger than the contact area between the longitudinal frame rib F1 and the electrode material m1 in (a). Therefore, as compared to the case where the percentage R1 in (a) is 25% or more, in the case where the percentage R1 in (b) is less than 25%, the conductivity between the longitudinal frame rib F2 and the electrode material m1 can be enhanced, and hence the charge-discharge performance is considered to be improved. Such improvement in charge-discharge performance is considered to improve the life performance.

The percentage R2 of the second portion in the section C2 of the longitudinal rib is less than 50%, preferably not more than 45%, and more preferably not more than 42%, and may be not more than 40% or not more than 38%. The percentage R2 is, for example, 5% or more, preferably 10% or more, and more preferably 15% or more, and may be 20% or more (e.g., 25% or more) or 30%. These upper and lower limits can be combined arbitrarily. Further, the percentage R1 of the 2A portion in the section C1 of the longitudinal frame rib is less than 25% and preferably 21% or less. The percentage R1 is, for example, 5% or more and may be 10% or more. These upper and lower limits can be combined arbitrarily.

When the percentage R2 and the percentage R1 are in such ranges, the life performance can be further improved.

As described above, in the positive electrode plate, the corrosion of the current collector easily proceeds during overcharge, and the current collector elongates remarkably. According to the above aspect of the present invention, by controlling the percentage R1 of the 2A portion and the percentage R2 of the second portion to the above ranges, a high effect of reducing the elongation of the current collector accompanying the charge and discharge can be obtained. It is thus preferable to use the current collector for at least the positive electrode plate because the effect of reducing the elongation of the current collector is exhibited sufficiently. In the positive electrode plate, the elongation of the current collector is reduced, so that the falling-off of the positive electrode material can be prevented.

The shape of the section C1 is not particularly limited but is preferably hexagonal. As shown in Fig. 6(b), the hexagon of the section C1 is preferably a hexagon having four corners inside the frame rib and two corners outside the frame rib. The shape of the section C2 is not particularly limited but is preferably octagonal. When the section C1 is hexagonal, and the section C2 is octagonal, the inner angle of the vertex does not become excessively small, and the effect of preventing corrosion near the vertices is easily enhanced. In order to form a longitudinal frame rib having a hexagonal section C1 or a longitudinal rib having an octagonal section C2, for example, a longitudinal frame rib having a rectangular section C1 or a longitudinal rib having a rectangular section C2 may be deformed. The method for deforming the longitudinal frame rib and the longitudinal rib is not particularly limited, but for example, at least the inside of the frame rib and the inner rib may be pressed. At that time, the pressing conditions of the inner rib may be appropriately selected so that the percentage R1 of the 2A portion and the percentage R2 of the second portion are within predetermined ranges. By forming the section C1 into a hexagonal shape and the section C2 into an octagonal shape, it becomes easy to control the percentage R1 to less than 25% and the percentage R2 to less than 50%. The hexagon or octagon does not have to be an exact hexagon or octagon in the mathematical sense, and the vertices may be slightly rounded or each side may be slightly bent. Note that the shape of the first cross-section of the longitudinal frame rib may be octagonal, as in the case of the second cross-section of the longitudinal rib. When the shape of the first cross-section is octagonal, the percentage of the first portion in the first cross-section becomes high (i.e., the percentage R1 of the second portion becomes small), so that the elongation of the current collector can be easily reduced.

The above aspect of the present invention is useful when a punched current collector is used as the current collector of the positive electrode, as described above. The punched current collector is preferably a current collector punched out of a stretched sheet of lead or a lead alloy. Since the stretched sheet easily generates a striped pattern of a metallic fibrous structure, the percentages of the 2A portion and the second portion can be easily adjusted.

When the current collector is a current collector punched out of a stretched sheet of lead or a lead alloy, a total length WLW of the inner dimensions of the transverse rib and a total length WLH of the inner dimensions of the longitudinal rib may satisfy WLH/LW ≥ 0.8 and may satisfy WLH/WLW ≥ 1.3. In this case, the corrosion of the current collector tends to penetrate to the inside, and hence the elongation and distortion of the current collector are reduced more remarkably by controlling the percentage R2 to be less than 50%. Here, the inner dimension length of each inner rib means the length in the inner dimension of the grid square, that is, the length (bar length) of the side of a rectangular space defining the grid square. Note that the direction of the length WLW (a direction in which the transverse rib elongates) usually corresponds to the stretching direction of the stretched sheet (machine direction (MD)).

In the first portion of the second cross-section, that the fibrous structure (the direction of the stripes) extends along the contour of the section C2 refers to a state described below. First, the current collector is cut into three equal sections: an upper region on the upper element side of the frame rib; a lower region on the lower element side of the frame rib; and a middle region between the upper region and the lower region. At that time, in a plurality of longitudinal ribs, four rows of the sections C2 perpendicular to the first direction (parallel to the upper element and the lower element and parallel to the thickness direction) are formed. That is, one row of the sections C2 is formed in each of the upper region and the lower region, and two rows of the sections C2 are formed in the middle region. When the trisection dividing line corresponds to the intersection (node) of the longitudinal and transverse ribs, the current collector may be divided into three sections with the dividing line slightly shifted in whole or in part so that the section C2 is formed in the longitudinal rib portion between the intersections as much as possible. When the current collector is divided into three sections, the dimension of the lug or foot is not considered.

Next, from any two rows out of the four rows, a plurality of sections C2 to be observed (at least 60% or more of the sections C included in the two rows) are selected Of the outer peripheral region of the selected section C2, a portion in which the stripes of the fibrous structure have an angle of less than 45° with the contour of the section C2 with reference to the horizontal plane in the first direction from the side element is the first portion. A portion except for the first portion is the second portion. Specifically, at an arbitrary point P on the contour of each section C2, a tangent S1 of the point P is drawn, and a perpendicular L of the tangent S1 is drawn so as to pass through the point P. Next, a tangent S2 of a stripe existing at a depth of 55 µm from the point P on the perpendicular L and intersecting the perpendicular L is drawn at the intersection. When an angle θ between the tangent S2 and the tangent S1 is less than 45°, the point P constitutes the contour corresponding to the first portion. When the angle θ is 45° or more, the point P constitutes the contour corresponding to the second portion. Even when it cannot be determined whether or not the point P constitutes the contour corresponding to the first portion because the fibrous structure cannot be observed, the point P constitutes the contour corresponding to the second portion. In all the selected sections C2, the percentage of the length of the contour corresponding to the second portion to the total length of the contour of the section C2 is determined and averaged to calculate the percentage R2.

When the cut portion is the intersection of the longitudinal rib and the transverse rib (node), the average may be obtained excluding the cross-section, and the cut position of the longitudinal rib may be shifted so as to be off the node.

The percentage R1 can be obtained in accordance with the case of the percentage R2, but it is necessary to consider that the percentage R2 is the percentage of the length of the contour corresponding to the 2A portion disposed inside the frame rib in the second portion to the total length of the contour of the first cross-section (section C1). Further, with two longitudinal frame ribs existing in the current collector, when the frame ribs are paired, four pairs of sections C1 perpendicular to the first direction are formed when the current collector is cut into three equal sections as described above. That is, a pair of sections C1 are formed in each of the upper region and the lower region, a pair of sections C1 are formed on the upper region side, and a pair of sections C1 are formed on the lower region side in the middle region. Thus, at the time of distinguishing between the first portion and the second portion, any two pairs of the four pairs of sections C1 are selected Of the outer peripheral region of the selected section C1, a portion in which the stripes of the fibrous structure have an angle of less than 45° with the contour of the section C1 with reference to the horizontal plane in the first direction from the side element is the first portion. A portion except for the first portion is the second portion. Of the second portion, a portion located inside the frame rib and having the stripes of the fibrous structure at an angle of 45 ° or more with respect to the contour of the section C1 is the 2A portion. In all the selected sections C1, the percentage of the length of the contour corresponding to the 2A portion to the total length of the contour of the section C1 is determined and averaged to calculate the percentage R1.

At the time of forming the sections C1 and C2, the prepared current collector is embedded in a thermosetting resin so as to cover the whole of the prepared current collector to cure the resin, and thereafter, the current collector is cut. As the current collector, a current collector before being filled with the electrode material may be used, or a current collector, obtained by dissembling a lead-acid battery in a fully charged state and taking the current collector out of the lead-acid battery, may be used. In the latter case, first, the electrode plate taken out after the battery is dissembled is washed with water to remove an electrolyte solution containing sulfuric acid and is then dried. Thereafter, the electrode material is removed from the electrode plate, and the electrode material adhering to the surface of the current collector is removed by mannitol. The states of the metallic structure of the sections C1 and C2 are photographed and observed with a microscope after the current collector cross-section is etched.

In the present specification, in the case of a flooded-type battery, the fully charged state of the lead-acid battery is a state where in a water bath at 25°C ± 2°C, the constant current charge is performed at a current (A) 0.2 times a numerical value indicated as a rated capacity (Ah) until 2.5 V/cell is reached, and thereafter, the constant current charge is performed at a current (A) 0.2 times the numerical value indicated as the rated capacity (Ah) for two hours. In the case of a valve regulated battery, the fully charged state of the lead-acid battery is a state where a constant current constant voltage charge of 2.23 V/cell is performed in an air bath at 25°C ± 2°C at a current 0.2 times a numerical value indicated as the rated capacity (Ah), and charge is completed when the charge current at the constant voltage charge becomes 0.005 times the numerical value indicated as the rated capacity (Ah). Note that the numerical value indicated as the rated capacity is a numerical value in units of Ah. The unit of the current which is set based on the numerical value indicated as the rated capacity is A.

Note that the lead-acid battery in the fully charged state refers to a chemically converted lead-acid battery having been fully charged. The full charge of the lead-acid battery may be performed immediately after chemical conversion so long as being performed after chemical conversion or may be performed after a lapse of time from chemical conversion (e.g., a lead-acid battery in use (preferably at the initial stage of use) after chemical conversion may be fully charged). The battery in the initial stage of use refers to a battery that has not been used for a long time and has hardly been degraded.

In the section C2, the thickness (i.e., the thickness of the fibrous structure) of the first portion may only be 55 µm or more. When the thickness of the region in which the striped pattern of the fibrous structure is observed is less than 55 µm, even in the outer peripheral region that appears at a glance as the first portion, the region is regarded not as the first portion but as the second portion. The first portion having a thickness of 55 µm or more has a sufficient action to prevent the penetration of corrosion to the inside of the inner rib. In this case, the corrosion is likely to become highly uniform throughout the inner ribs. Therefore, the elongation of the current collector is remarkably reduced, and the falling of the electrode material is also remarkably prevented. From the viewpoint of further improving the penetration of the corrosion of the longitudinal rib to the inside, the thickness of the first portion is preferably 100 µm or more.

In the section C1, the thickness (i.e., the thickness of the fibrous structure) of the first portion may only be 55 µm or more. On the inside of the longitudinal frame rib, when the thickness of the region in which the striped pattern of the fibrous structure is observed is less than 55 µm, even in the outer peripheral region that appears at a glance as the first portion, the region is regarded not as the first portion but as the 2A portion. The first portion having a thickness of 55 µm or more has a sufficient action to prevent the penetration of corrosion to the inside of the frame rib. In this case, there are many regions where the corrosion layer grows along the surface of the frame rib, so that the corrosion is likely to become highly uniform throughout the frame rib. Therefore, the elongation of the current collector is remarkably reduced, and the falling of the electrode material is also remarkably prevented. From the viewpoint of further improving the penetration of the corrosion of the longitudinal frame rib to the inside, the thickness of the first portion is preferably 100 µm or more.

The thickness of the first portion in each of the section C1 and the section C2 may be measured as follows: First, a tangent S1 is drawn at an arbitrary point P1 on the contour of the first portion, and a perpendicular L of the tangent S1 is drawn so as to pass through the point P1. Next, at a point Px moving from the point P1 to a depth of X µm on the perpendicular L, a tangent S2 of a stripe intersecting the perpendicular L is continuously drawn. At this time, when the angle between the tangent S1 and the tangent S2 is continuously 45° or less, it can be said that the thickness of the first portion immediately below the point P1 is X µm or more.

The thickness of the inner rib may be, for example, 0.7 mm or more and 3 mm or less. The rib width of the inner rib may be, for example, 0.7 mm or more and 3 mm or less.

As described above, the lead-acid battery according to the above aspect has high life performance, and this effect is particularly remarkable in a charge-discharge cycle including overcharge. A Lead-acid battery for starting an engine of a vehicle easily comes into an overcharged state. Hence the lead-acid battery according to the above aspect is particularly suitable for such an application. However, in applications that are expected to be used in a partial state of charge (PSOC), such as idling-stop vehicles, lead-acid batteries are often used in a poor charged state and are rarely charged to an overcharged state or a fully charged state. From this viewpoint, the corrosion of the current collector and the falling-off of the electrode material due to the elongation of the current collector are less likely to be problems, and it is not considered necessary to reduce the percentage R1 and the percentage R2.

When a lead-acid battery is installed in a vehicle such as an automobile, the lead-acid battery may be disposed in the engine room. In this case, the lead-acid battery is exposed to a high temperature by the heat generated from the engine. When the temperature of the lead-acid battery increases, the corrosion of the current collector becomes more remarkable, so that the influence on the life performance related to the corrosion increases. Since the lead-acid battery according to the above aspect can make the corrosion in the current collector uniform, high life performance can be ensured even in use for an application where the lead-acid battery is disposed in an engine room of a vehicle.

The method for manufacturing a lead-acid battery according to the above aspect of the present invention includes, for example, the steps of: preparing the current collector; and obtaining at least one electrode plate selected from the group consisting of the positive electrode plate and the negative electrode plate each including the current collector and the electrode material held by the current collector. As described above, the current collector can be obtained by a preparation process including pressing an intermediate frame rib, which is a precursor of the frame rib, and an intermediate rib, which is a precursor of the inner rib. The preparation step of the current collector includes, for example, (i) a step of preparing a rolled plate, (ii) a step of punching the rolled plate to form an intermediate grid body having an intermediate frame rib and a plurality of intermediate ribs formed in a grid shape inside the intermediate frame rib, and (iii) a step of pressing the intermediate grid body from a thickness direction of the intermediate grid body to form at least a part of the frame rib and at least some of the inner ribs. Here, the pressing includes, for example, deforming at least a part of the intermediate frame rib so that at least an inner end of the intermediate frame rib in a rib width direction (first rib width direction) intersecting (e.g., orthogonal to) an extending direction of the intermediate frame rib is thinner than a center in the first rib width direction and that the percentage R1 is less than 25%, and deforming at least some of the plurality of intermediate ribs so that at least one end in a rib width direction (second rib width direction) intersecting (e.g., orthogonal to) an extending direction of the intermediate ribs is thinner than a center in the second rib width direction and that the percentage R2 is less than 50%. In the pressing, the deformation of at least a part of the intermediate frame rib and the deformation of at least some of the plurality of intermediate ribs may be performed simultaneously or separately. When the deformation of the intermediate frame rib and the deformation of the intermediate rib are to be performed separately, for example, the intermediate rib may be pressed prior to the pressing of the intermediate frame rib, or the intermediate frame rib may be pressed prior to the pressing of the intermediate rib.

The lead-acid battery according to the embodiment of the present invention will be described for each of the main constituent elements with reference to the drawings, but the present invention is not limited to the following embodiment.

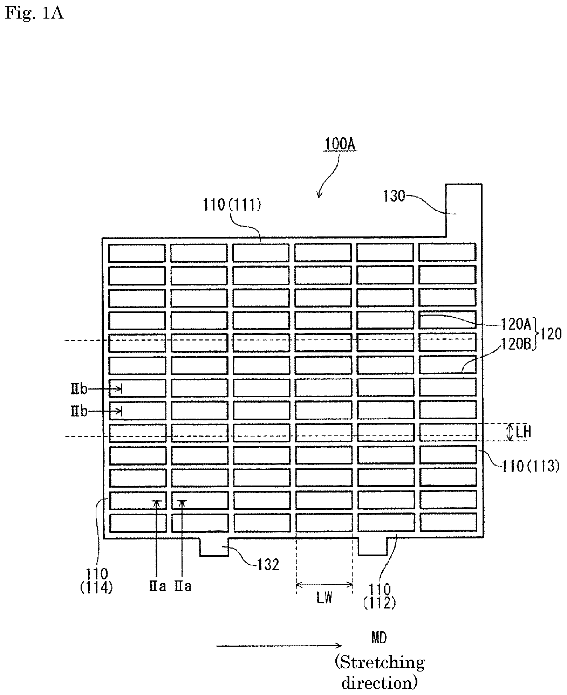

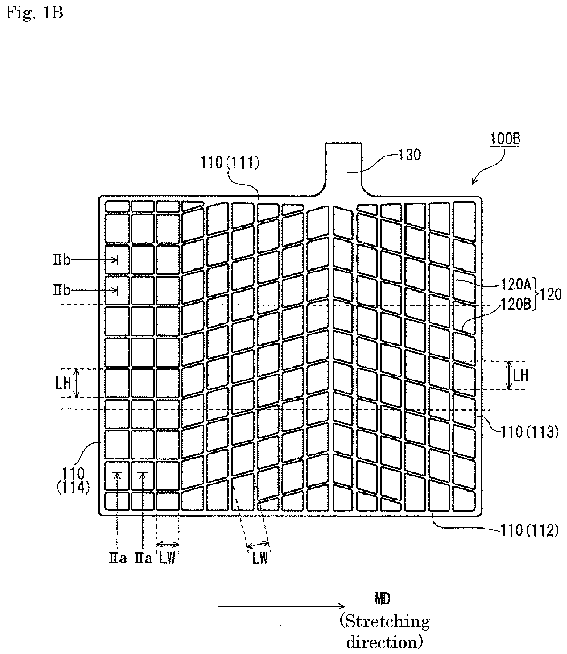

Figs. 1A and 1B are plan views showing appearances of current collectors 100A and 100B constituting a positive electrode plate in a lead-acid battery according to one embodiment and another embodiment of the present invention, respectively. Each of the current collectors 100A and 100B has a frame rib 110 and inner ribs 120 inside the frame rib 110. The frame rib 110 includes an upper element 111 continuous with a lug 130, a lower element 112 facing the upper element 111, and a pair of side elements 113 and 114 coupling the upper element 111 with the lower element 112. Dashed lines indicate the boundaries that divide the inner ribs into three equal sections: upper, middle, and lower regions. The current collector 100A of Fig. 1A has a lower protrusion (also referred to as a foot) 132 continuous with the lower element 112. In the current collector 100B of Fig. 1B, the transverse rib extends obliquely with respect to the upper or lower element. LH indicates the inner dimension length per grid of the longitudinal rib, and LW indicates the inner dimension length per grid of the transverse rib.

The current collectors 100A and 100B are, for example, grid bodies punched out of stretched sheets of lead or a lead alloy, and the stretching direction is a direction indicated by an arrow MD in Fig. 1. A section C2 of a longitudinal rib 120A is a cross-section at line lla-lla in Fig. 1, and a section G2 of a transverse rib 120B is a cross-section at line llb-llb. The metallic structure of the stretched sheet easily forms a fibrous structure extending in the stretching direction. Hence a striped pattern of the structure as thus described is generated in the section C1. On the other hand, the section G2 may have a pattern similar to that when a fibrous structure is cut.

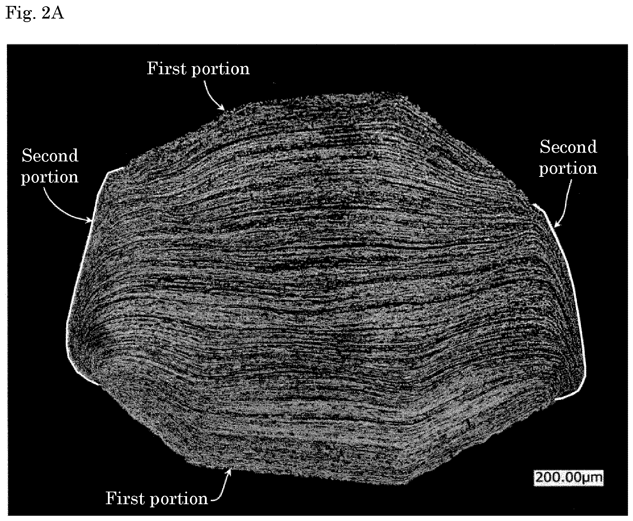

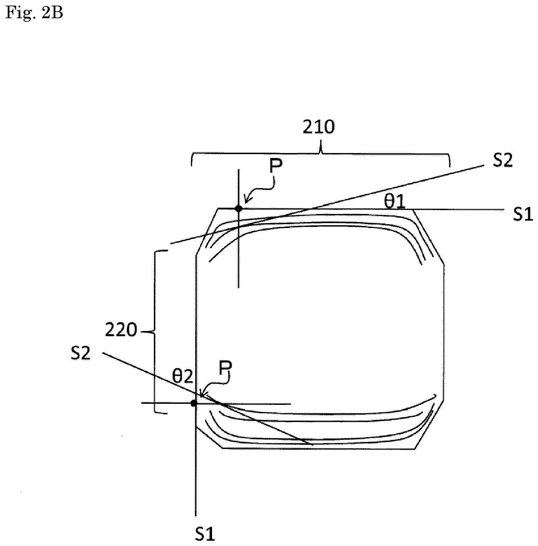

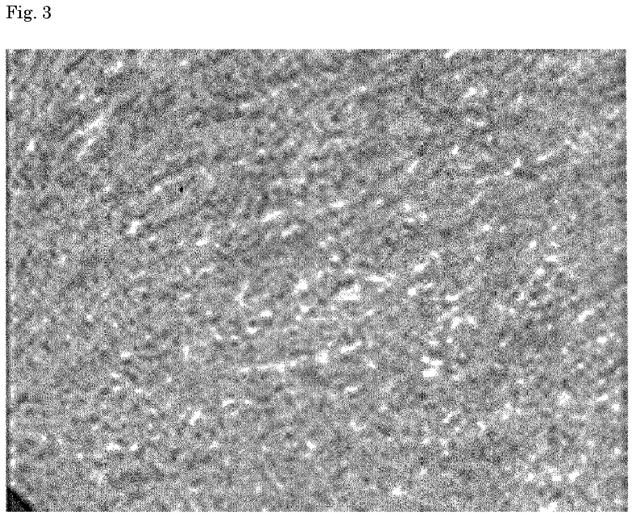

Fig. 2A is an example of a photograph of the section C2 of the longitudinal rib 120A, and the cross-section has an octagonal shape and shows the striped pattern of the metallic fibrous structure. Fig. 2B is a conceptual view of an example of an octagonal section C2 imitating Fig. 2A. On the other hand, Fig. 3 is an example of a photograph of the section G2 of the transverse rib 120B, and the cross-section has a pattern formed by a cross-section perpendicular to the fiber length of the metallic fibrous structure. In Fig. 2B, most of the left and right sides of the octagonal section C2 are a second portion 220, and the other outer peripheral region is a first portion 210. In the first portion 210, the stripe (tangent S2) of the fibrous structure has an angle θ1 of less than 45° with the contour (line S1) of the section C. On the other hand, in the second portion 220, no stripe of the fibrous structure can be confirmed, or the stripe (tangent S2) has an angle θ2 exceeding 45° with the contour (line S1) of the section C. In Fig. 2A, there is a region in the outermost layer of the second portion 220 where a striped pattern of a fibrous structure having a thickness of less than about 55 µm is observed, but such a thin portion does not constitute the first portion 210.

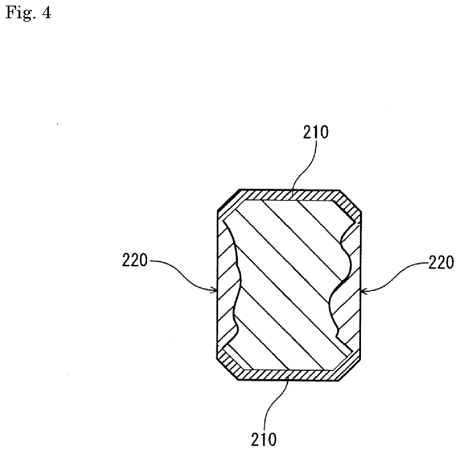

Fig. 4 is a conceptual view of the section C2 showing the progress of corrosion of the inner rib. A portion where the shallow corrosion layer has been formed is the first portion where the fibrous structure extends along the contour of the section C2, and even when corrosion proceeds, the corrosion layer is hardly formed deep. However, due to the formation of the fibrous structure, peeling tends to occur near the interface between the current collector and the electrode material. Thus, the stress that the current collector tries to deform is considered to be easily relaxed. On the other hand, a portion where a wedge-shaped deep corrosion layer has been formed is the second portion. When a deep corrosion layer is formed, non-uniform deformation of the current collector easily occurs, the current collector elongates, and the electrode material easily falls off.

Fig. 6(b) corresponds to a cross-sectional view taken along line Vlb-Vlb in Fig. 1. In Fig. 6(b), the section C1 of the longitudinal frame rib F2 is a hexagon having four corners on the inside of the longitudinal frame rib F2 and two corners on the outside thereof. In the section C1, the 2A portion p2A exists on the inside of the longitudinal frame rib F2, and the 2B portion p2B exists on the outside thereof. In the outer peripheral region of the longitudinal frame rib F2, the first portion p1 exists between the 2A portion p2A and the 2B portion p2B. The states of corrosion in the first portion p1 and 2A portion p2A are the same as those in the case of the first portion and the second portion in the inner rib.

### (Electrode plate)

The electrode plate of the lead-acid battery includes a current collector and a positive electrode material held by the current collector. Note that the electrode material is obtained by removing the current collector from the electrode plate. Note that a member such as a mat or a pasting paper may be stuck to the electrode plate. Such a member (sticking member) is used integrally with the electrode plate and is thus included in the electrode plate. When the electrode plate includes such a member, the electrode material excludes the current collector and the sticking member. However, when a sticking member such as a mat is pasted to the separator, the thickness of the sticking member is included in the thickness of the separator.

The current collector is suitably applied to the positive electrode plate but may be applied to a negative electrode plate. The current collector is preferably used at least for the positive electrode plate. When the lead-acid battery is provided with a plurality of positive electrode plates, the above current collector may be used for some of the positive electrode plates, and the above current collector may be used for all of the positive electrode plates. Similarly, when the lead-acid battery includes a plurality of negative electrode plates, the above current collector may be used for at least some of the negative electrode plates, and the above current collector may be used for all of the negative electrode plates.

As described above, the current collector is preferably a punched current collector. As described above, the current collector has a frame rib, a lug provided on the frame rib, and inner ribs inside the frame rib. The current collector is preferably a grid-shaped current collector (grid body). In the grid body, the inner rib portion is in a grid shape (including a net shape). The use of the grid body can facilitate the positive electrode material to be carried. The frame rib is preferably square. The frame rib is preferably rectangular. Note that the square and the rectangle need not be strictly rectangular, and the vertex may be slightly rounded, or each side may be bent slightly.

The current collector can be formed by, for example, press-punching a sheet of lead or a lead alloy. The sheet is preferably a stretched sheet (also referred to as a rolled plate) subjected to stretching. The stretched sheet may be a uniaxially stretched sheet or a biaxially stretched sheet.

When the above current collector is used in some electrode plates, the other current collector is not particularly limited and may be formed by casting lead (Pb) or a lead alloy or by processing a sheet of lead or a lead alloy. Examples of the processing method include expanding and punching.

### (Positive electrode plate)

As the positive electrode plate, what is called a paste type positive electrode plate is preferably used.

As a lead alloy used for the positive current collector, a Pb-Ca alloy, a Pb-Ca-Sn alloy, or a Pb-Sn alloy are preferred in terms of corrosion resistance and mechanical strength. As the positive current collector, lead having a purity of three nines or higher (purity of 99.9% by mass or more) may be used. The positive current collector may have lead alloy layers having different compositions, and a plurality of alloy layers may be used.

The positive electrode material contains a positive active material (lead dioxide or lead sulfate) that develops a capacity through an oxidation-reduction reaction. The positive electrode material may optionally contain an additive.

The density of the positive electrode material may only be, for example, 3.6 g/cm³ or more. From the viewpoint of ensuring a sufficient initial capacity, the positive electrode material density is preferably 4.8 g/cm³ or less.

In the present specification, the density of the electrode material means the value of the bulk density of the electrode material in a fully charged state and is measured as follows: The battery after chemical conversion or in use (preferably at the initial stage of use) is fully charged and then disassembled, and the obtained electrode plate is washed with water and dried to remove an electrolyte solution in the electrode plate. (The washing with water is performed until it is confirmed that the color of the pH test paper does not change by pressing the pH test paper against the surface of the electrode plate washed with water. However, the washing with water is performed within two hours. The positive electrode plate washed with water is dried at 60°C ± 5°C for about 6 hours. When the sticking member is included in the electrode plate after drying, the sticking member is removed from the electrode plate by peeling). Next, the electrode material is separated from the electrode plate to obtain an uncrushed measurement sample. A sample is charged into a measurement case and evacuated, which is then filled with mercury at a pressure of 0.5 psia to 0.55 psia (≈ 3.45 kPa or more and 3.79 kPa or less) to measure the bulk volume of the electrode material, and the mass of the measurement sample is divided by the bulk volume to determine the bulk density of the electrode material. A volume obtained by subtracting the injection volume of mercury from the volume of the measurement case is defined as the bulk volume.

The density of the electrode material is measured using an automatic porosimeter (Autopore IV9505) manufactured by Shimadzu Corporation.

A non-chemically converted positive electrode plate is obtained in such a manner that a positive current collector is filled with a positive electrode paste, which is then cured and dried. Thereafter, the non-chemically converted positive electrode plate is converted chemically. The positive electrode paste is prepared by kneading a lead powder, an additive, water, sulfuric acid, and the like.

### (Negative electrode plate)

The lead alloy used for the negative current collector may be either a Pb-Ca alloy or a Pb-Ca-Sn alloy. The lead or lead alloys may further contain, as an additive element, at least one selected from the group consisting of Ba, Ag, Al, Bi, As, Se, Cu, and the like.

The negative electrode material contains, as an essential component, a negative active material (lead or lead sulfate), which exhibits a capacity by an oxidation-reduction reaction, and can contain an organic expander, a carbonaceous material, and an additive such as barium sulfate. The negative active material in a charged state is spongy lead, but a non-chemically converted negative electrode plate is usually prepared using a lead powder.

At least one kind selected from the group consisting of lignins and/or synthetic organic expanders may be used as the organic expander. Examples of the lignins include lignin and lignin derivatives. Examples of the lignin derivative include lignin sulfonic acid or its salt (alkali metal salt such as sodium salt) The organic expander is an organic polymer containing a sulfur element and generally contains a plurality of aromatic rings in the molecule and the sulfur element as a sulfur-containing group. Among the sulfur-containing groups, a sulfonic acid group or a sulfonyl group, which is a stable form, is preferred. The sulfonic acid group may be present in an acid form or in a salt form like a Na salt.

As a specific example of the organic expander, a condensate obtained using an aldehyde compound (aldehyde or its condensate such as formaldehyde), which is a compound having a sulfur-containing group and an aromatic ring, is preferable. Examples of the aromatic ring include a benzene ring and a naphthalene ring. When the compound having an aromatic ring has a plurality of aromatic rings, the plurality of aromatic rings may be coupled by direct bonding or a coupling group (e.g., alkylene group, sulfone group, etc.). Examples of such a structure include biphenyl, bisphenylalkane, and bisphenylsulfone. Examples of the compound having an aromatic ring include a compound having the aromatic ring described above and a hydroxy group and/or an amino group. The hydroxy group and the amino group may be directly bonded to the aromatic ring or may be bonded as an alkyl chain having the hydroxy group or the amino group. The compound having an aromatic ring is preferably a bisphenol compound, a hydroxybiphenyl compound, a hydroxynaphthalene compound, a phenol compound, or the like. The compound having an aromatic ring may further have a substituent. The organic expander may contain one kind of residues of these compounds or may contain a plurality of kinds thereof. The bisphenol compound is preferably bisphenol A, bisphenol S, bisphenol F, or the like.

The sulfur-containing group may be directly bonded to the aromatic ring contained in the compound and may, for example, be bonded to the aromatic ring as an alkyl chain having the sulfur-containing group.

Further, for example, a condensate obtained using an aldehyde compound of the compound having the aromatic ring described above and a monocyclic aromatic compound (aminobenzenesulfonic acid, alkylaminobenzenesulfonic acid, phenolsulfonic acid, or its substituent) may be used as the organic expander.

The content of the organic expander contained in the negative electrode material is, for example, preferably 0.01% by mass or more, more preferably 0.02% by mass or more, and still more preferably 0.05% by mass or more. On the other hand, the content is preferably 1.0% by mass or less, more preferably 0.8% by mass or less, and still more preferably 0.5% by mass or less. These lower and upper limits can be combined arbitrarily. Here, the content of the organic shrinkage inhibitor contained in the negative electrode material is a content in the negative electrode material collected from a chemically converted lead-acid battery in the fully charged state by a method to be described later.

As the carbonaceous material contained in the negative electrode material, carbon black, graphite, hard carbon, soft carbon, and the like can be used. Examples of the carbon black include acetylene black, furnace black, and lamp black. Furnace black also includes ketjen black (product name). The graphite may be a carbon material including a graphite-type crystal structure and may be either artificial graphite or natural graphite.

The content of the carbonaceous material in the negative electrode material is, for example, preferably 0.05% by mass or more, and more preferably 0.2% by mass or more. On the other hand, the content is preferably 4.0% by mass or less, more preferably 3% by mass or less, and still more preferably 2% by mass or less. These lower and upper limits can be combined arbitrarily.

The content of barium sulfate in the negative electrode material is, for example, preferably 0.5% by mass or more, more preferably 1% by mass or more, and still more preferably 1.3% by mass or more. On the other hand, the content is preferably 3.0% by mass or less, more preferably 2.5% by mass or less, and still more preferably 2% by mass or less. These lower and upper limits can be combined arbitrarily.

Hereinafter, a method of quantifying the amounts of the organic shrinkage inhibitor, the carbonaceous material, and the barium sulfate contained in the negative electrode material will be described. Prior to quantitative analysis, a chemically converted lead-acid battery is fully charged and disassembled to obtain a negative electrode plate to be analyzed. The obtained negative electrode plate is washed with water and dried to remove the electrolyte solution in the negative electrode plate. (The washing with water is performed until it is confirmed that the color of the pH test paper does not change by pressing the pH test paper against the surface of the negative electrode plate washed with water. However, the washing with water is performed within two hours. The negative electrode plate washed with water is dried at 60°C ± 5°C in a reduced pressure environment for about six hours. When the sticking member is included in the negative electrode plate after drying, the sticking member is removed from the negative electrode plate by peeling). Next, the negative electrode material is separated from the negative electrode plate to obtain an uncrushed sample S.

### (Organic expander)

The uncrushed sample S is crushed, and the crushed sample S is immersed in a 1 mol/L NaOH aqueous solution to extract the organic expander. An insoluble component is removed from a NaOH aqueous solution containing the extracted organic expander by filtration. The obtained filtrate (hereinafter also referred to as a filtrate to be analyzed) is desalted, concentrated, and dried to obtain a powder of the organic expander (hereinafter also referred to as a powder to be analyzed). Desalting may be performed by immersing the filtrate in distilled water in a dialysis tube.

The organic expander is specified by obtaining information from an infrared spectral spectrum of the powder to be analyzed, an ultraviolet-visible absorption spectrum of a solution obtained by dissolving the powder to be analyzed in distilled water or the like, a nuclear magnetic resonance (NMR) spectrum of a solution obtained by dissolving the powder to be analyzed in a solvent such as heavy water, a pyrolysis gas chromatography-mass spectrometry (GC-MS) capable of obtaining information on individual compounds constituting the substance, or the like.

The ultraviolet-visible absorption spectrum of the filtrate to be analyzed is measured. The content of the organic expander in the negative electrode material is quantified using a spectral intensity and a calibration curve prepared in advance. When the structural formula of the organic expander to be analyzed cannot be exactly specified, and the calibration curve of the same organic expander cannot be used, the calibration curve is prepared using an available organic expander exhibiting an ultraviolet-visible absorption spectrum, an infrared spectral spectrum, an NMR spectrum, and the like similar to those of the organic expander to be analyzed.

### [Carbonaceous material and barium sulfate]

The uncrushed sample S is crushed, 50 ml of nitric acid having a concentration of 20% by mass is added to 10 g of the crushed sample S, and the mixture is heated for about 20 minutes to dissolve a lead component as lead nitrate. Next, a solution containing lead nitrate is filtered, and solids such as carbonaceous materials and barium sulfate are filtered off.

The obtained solid is dispersed in water to form a dispersion, and then components except for the carbonaceous material and barium sulfate (e.g., reinforcing material) are removed from the dispersion by using a sieve. Next, the dispersion is subjected to suction filtration using a membrane filter with its mass measured in advance, and the membrane filter is dried with the filtered sample in a dryer at 110°C ± 5°C. The filtered sample is a mixed sample of a carbonaceous material and barium sulfate. A mass (A) of the mixed sample is measured by subtracting the mass of the membrane filter from the total mass of the dried mixed sample and the membrane filter. Thereafter, the dried mixed sample is placed in a crucible together with the membrane filter, and the crucible is heated to a temperature of 700°C or higher. The remaining residue is barium oxide. A mass (B) of barium sulfate is determined by converting the mass of barium oxide to the mass of barium sulfate. The mass of the carbonaceous material is calculated by subtracting the mass B from the mass A.

The density of the negative electrode material is, for example, 3 g/cm³ or more and 4.8 g/cm³ or less.

The negative electrode plate can be formed in such a manner that a negative electrode current collector is filled with a negative electrode paste, which is then cured and dried to prepare a non-chemically converted negative electrode plate, and then the non-chemically converted negative electrode plate is chemically converted. The negative electrode paste is prepared by adding water and sulfuric acid to a lead powder and various additives and kneading them. In the curing process, it is preferable to cure the non-chemically converted negative electrode plate at room temperature or at a higher temperature and humidity.

The chemical conversion can be performed by charging the electrode plate group in a state where the element including the non-chemically converted negative electrode plate is immersed in the electrolyte solution containing sulfuric acid in the container of the lead-acid battery. However, the chemical conversion may be performed before the lead-acid battery or the electrode plate group is assembled. The chemical conversion produces spongy lead.

### (Electrolyte solution)

The electrolyte solution is an aqueous solution containing sulfuric acid and may be gelled as necessary. The specific gravity of the electrolyte solution in the lead-acid battery in the fully charged state is, for example, 1.20 to 1.35 at 20°C and preferably 1.25 to 1.32.

### (Separator)

A separator is usually disposed between the negative electrode plate and the positive electrode plate. A nonwoven fabric, a microporous film, or the like is used as the separator. The thickness and the number of separators interposed between the negative electrode plate and the positive electrode plate may be selected in accordance with the distance between the electrodes.

The nonwoven fabric is a mat in which fibers are intertwined without being woven and is mainly made of fibers. In the nonwoven fabric, for example, 60% by mass or more of the nonwoven fabric is formed of fibers. As the fibers, it is possible to use glass fibers, polymer fibers (polyolefin fibers, acrylic fibers, polyester fibers such as polyethylene terephthalate fibers, etc.), pulp fibers, and the like. Among them, glass fibers are preferred. The nonwoven fabric may contain components in addition to the fibers, such as an acid-resistant inorganic powder and a polymer as a binder.

On the other hand, the microporous film is a porous sheet mainly made of components except for fiber components and is obtained by, for example, extrusion molding a composition containing, for example, a pore-forming additive (polymer powder and/or oil, etc.) into a sheet shape and then removing the pore-forming additive to form pores. The microporous film is preferably made of a material having acid resistance and is preferably composed mainly of a polymer component. As the polymer material, a polyolefin such as polyethylene or polypropylene is preferred.

The separator may be, for example, made of only a nonwoven fabric or made of only a microporous film. The separator may be, when required, a laminate of a nonwoven fabric and a microporous film, a laminate of different or the same kind of materials, or a laminate of different or the same kind of materials in which recesses and projections are engaged to each other.

The separator may be formed in a bag shape. In this case, the bag-shaped separator may house the positive electrode plate or may house the negative electrode plate. When the bag-shaped separator houses the positive electrode plate, it is possible to prevent a lower short circuit caused by the positive electrode material, having fallen off from the current collector and been accumulated on the bottom of the container, coming into contact with the negative electrode plate. On the other hand, when the bag-shaped separator houses the negative electrode plate, it is possible to prevent a short circuit due to the elongation of the positive current collector and the penetration of the separator. It can be said to be preferable that the bag-shaped separator accommodates the negative electrode plate because the elongation of the positive current collector tends to be a problem during overcharge.

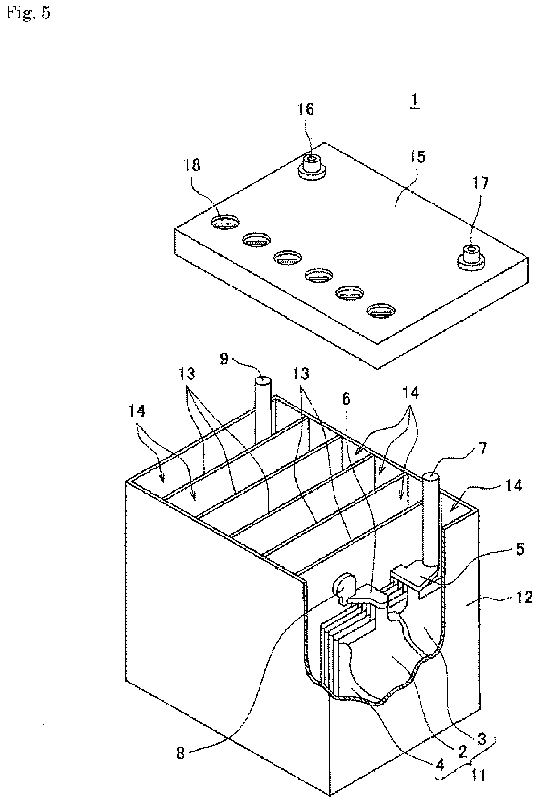

Fig. 5 shows the appearance of an example of the lead-acid battery according to the embodiment of the present invention.

A lead-acid battery 1 includes a container 12 storing an electrode plate group 11 and an electrolyte solution (not shown). The inside of the container 12 is partitioned into a plurality of cell chambers 14 by partitions 13. In each cell chamber 14, one electrode plate group 11 is housed. The opening of the container 12 is closed with a lid 15 having a negative electrode terminal 16 and a positive electrode terminal 17. The lid 15 is provided with a vent plug 18 for each cell chamber. At the time of water addition, the vent plug 18 is removed to supply a water addition liquid. The vent plug 18 may have a function of discharging gas generated in the cell chamber 14 to the outside of the battery.

The electrode plate group 11 is configured by stacking a plurality of negative electrode plates 2 and positive electrode plates 3 with a separator 4 interposed therebetween. Here, the bag-shaped separator 4 storing the negative electrode plate 2 is shown, but the form of the separator is not particularly limited. In the cell chamber 14 located at one end of the container 12, a negative electrode shelf 6 for connecting the plurality of negative electrode plates 2 in parallel is connected to a through-connector 8, and a positive electrode shelf 5 for connecting the plurality of positive electrode plates 3 in parallel is connected to a positive electrode pole 7. The positive electrode pole 7 is connected to the positive electrode terminal 17 outside the lid 15. In the cell chamber 14 located at the other end of the container 12, a negative electrode pole 9 is connected to the negative electrode shelf 6, and the through-connector 8 is connected to the positive electrode shelf 5. The negative electrode pole 9 is connected to the negative electrode terminal 16 outside the lid 15. Each through-connector 8 passes through a through-hole provided in the partition 13 and connects the electrode plate groups 11 of the adjacent cell chambers 14 in series.

Although Fig. 5 shows an example of a flooded-type battery (vented battery), the lead-acid battery may be a valve regulated battery (VRLA type). In the flooded-type battery, the elongation of the current collector easily becomes remarkable as compared to the valve regulated battery. Therefore, in the above aspect of the present invention, the elongation of the current collector can be suppressed, which is particularly suitable for a flooded-type battery.

Note that the life performance of the lead-acid battery is evaluated using a test battery in the following conditions:
In order to make the overcharge condition higher than in a normal four-minute and ten-minute test specified in Japanese Industrial Standards (JIS) D 5301-2006, a test of two-minute discharge and ten-minute charge (two-minute and ten-minute test) is performed at 75°C ± 2°C, and cold cranking ampere (CCA) performance is determined every 550 cycles.
Discharge: 25 A, 2 min.
Charge: 2.47 V/cell (Max25A), 10 minutes
Note that the method for determining CCA performance is in accordance with the provisions of JIS D 5301-2006.
The elongation of the current collector becomes remarkable especially in the positive electrode plate during overcharge, and hence the life performance is evaluated based on the elongation of the positive current collector.

A lead-acid battery according to one aspect of the present invention is described as follows.
(1) One aspect of the present invention is a lead-acid battery including: a positive electrode plate; a negative electrode plate; and an electrolyte solution. At least one electrode plate selected from the group consisting of the positive electrode plate and the negative electrode plate includes a current collector and an electrode material held by the current collector. The current collector has a frame rib, a lug provided on the frame rib, and inner ribs inside the frame rib. The frame rib includes an upper element continuous with the lug, a lower element facing the upper element, and a pair of side elements coupling the upper element with the lower element. The inner ribs include a longitudinal rib extending in a first direction from the upper element toward the lower element, and a transverse rib extending in a second direction from one of the side elements toward the other of the side elements. A striped pattern of a metallic fibrous structure is seen in each of a first cross-section perpendicular to the first direction of the side element of the frame rib and a second cross-section perpendicular to the first direction of the longitudinal rib. An outer peripheral region of the first cross-section is made up of a first portion in which the fibrous structure extends along a contour of the first cross-section and a second portion except for the first portion. The second portion is made up of a 2A portion disposed inside the frame rib and a 2B portion disposed outside the frame rib. An outer peripheral region of the second cross-section is made up of a first portion in which the fibrous structure extends along a contour of the second cross-section and a second portion except for the first portion. A percentage R1 of a length of a contour corresponding to the 2A portion to a total length of the contour of the first cross-section is less than 25%. A percentage R2 of a length of a contour corresponding to the second portion to a total length of the contour of the second cross-section is less than 50%.

(2) In (1) above, the percentage R2 is preferably 45% or less.
(3) In (1) or (2) above, the percentage R2 is preferably 42% or less.
(4) In any one of (1) to (3) above, the percentage R2 may be 40% or less.
(5) In any one of (1) to (4) above, the percentage R2 may be 38% or less.
(6) In any one of (1) to (5) above, the percentage R2 is preferably 5% or more.
(7) In any one of (1) to (6) above, the percentage R2 is preferably 10% or more.
(8) In any one of (1) to (7) above, the percentage R2 is preferably 15% or more.
(9) In any one of (1) to (8) above, the percentage R2 may be 20% or more.
(10) In any one of (1) to (9) above, the percentage R2 may be 25% or more.
(11) In any one of (1) to (10) above, the percentage R2 may be 30% or more.

(12) In any one of (1) to (11) above, the percentage R1 is preferably 21% or less.
(13) In any one of (1) to (12) above, the percentage R1 may be 5% or more.
(14) In any one of (1) to (13) above, the percentage R1 may be 10% or more.

(15) In any one of (1) to (14) above, at least the positive electrode plate preferably includes the above current collector.

(16) In any one of (1) to (15) above, the first cross-section is preferably hexagonal, and the second cross-section is preferably octagonal.

(17) In any one of (1) to (16) above, the current collector is preferably a current collector punched out of a stretched sheet of lead or a lead alloy.
(18) In (17) above, the total length WLH of the inner dimensions of the longitudinal ribs and the total length WLW of the inner dimensions of the transverse ribs preferably satisfy WLH/WLW ≥ 0.8.
(19) In (18) above, WLH/WLW ≥ 1.3 is preferably satisfied.

(20) In any one of (1) to (19) above, the lead-acid battery is particularly suitable for starting an engine of a vehicle.

(21) In any one of (1) to (20) above, the lead-acid battery is particularly suitable for being disposed in the engine room of a vehicle.

(22) In any one of (1) to (21) above, the thickness of the inner rib is preferably 0.7 mm or more.
(23) In any one of (1) to (22) above, the thickness of the inner rib is preferably 3 mm or less.

(24) In any one of (1) to (23) above, the rib width of the inner rib is preferably 0.7 mm or more.
(25) In any one of (1) to (24) above, the rib width of the inner rib is preferably 3 mm or less.

(26) In any one of (1) to (25) above, the thickness of the first portion in the second cross-section is preferably 55 µm or more.
(27) In any one of (1) to (26) above, the thickness of the first portion in the second cross-section is preferably 100 µm or more.

(28) In any one of (1) to (27) above, the thickness of the first portion in the first cross-section is preferably 55 µm or more.
(29) In any one of (1) to (28) above, the thickness of the first portion in the first cross-section is preferably 100 µm or more.

(30) In any one of (1) to (29) above, the density of the electrode material of the positive electrode plate is preferably 3.6 g/cm³ or more.
(31) In any one of (1) to (30) above, the density of the electrode material of the positive electrode plate is preferably 4.8 g/cm³ or less.

(32) The method for manufacturing a lead-acid battery according to any one of (1) to (31) above includes, for example, the steps of: preparing the current collector; and obtaining at least one electrode plate selected from the group consisting of the positive electrode plate and the negative electrode plate each including the current collector and the electrode material held by the current collector. The preparation step of the current collector includes, for example, the steps of preparing a rolled plate, a step of punching the rolled plate to form an intermediate grid body having an intermediate frame rib and a plurality of intermediate ribs formed in a grid shape inside the intermediate frame rib, and a step of pressing the intermediate grid body from a thickness direction of the intermediate grid body to form at least a part of the frame rib and at least some of the inner ribs. The pressing includes, for example, deforming at least a part of the intermediate frame rib so that at least an inner end of the intermediate frame rib in a first rib width direction intersecting an extending direction of the intermediate frame rib is thinner than a center in the first rib width direction and that the percentage R1 is less than 25%, and deforming at least some of the plurality of intermediate ribs so that at least one end in a second rib width direction intersecting an extending direction of the intermediate ribs is thinner than a center in the second rib width direction and that the percentage R2 is less than 50%.

Hereinafter, the present invention will be specifically described based on examples and comparative examples, but the present invention is not limited to the following examples.

### «Lead-acid batteries A1 to A7 and lead-acid batteries B1 to B3» (1) Preparation of current collector

A rolled sheet of a Pb-Ca-Sn alloy is punched, and an inner rib and/or a frame rib is pressed to obtain a current collector. At the time of obtaining the current collector, pressing is performed so that the percentage R1 of the second portion in the section C1 and the percentage R2 of the second portion in the section C2 are the values shown in Table 1. Note that the shape of the section C1 is hexagonal as shown in Fig. 6(b), and the shape of the section C2 is octagonal.

### (2) Preparation of positive electrode plate

A positive electrode paste containing lead powder is prepared, the grid part of the current collector obtained in (1) above is filled with the positive electrode paste, and cured and dried to prepare a non-chemically converted positive electrode plate. At this time, the filling amount of the positive electrode paste is adjusted so that the density of the positive electrode material after full charge is 3.6 g/cm³.

### (3) Preparation of negative electrode plate

Lead powder, water, dilute sulfuric acid, barium sulfate, carbon black, and an organic expander (sodium lignin sulfonate) are mixed to prepare a negative electrode paste. An expanded grid made of a Pb-Ca-Sn alloy as a negative current collector is filled with the negative electrode paste, which is then cured and dried to obtain a non-chemically converted negative electrode plate. The filling amount of the negative electrode paste is adjusted so that the density of the negative electrode material after full charge becomes 3.7 g/cm³.

### (4) Preparation of test battery

The test battery is 12 V, and the rated five-hour-rate capacity is 30 Ah.

The test battery is made up of six positive electrode plates and seven negative electrode plates sandwiching the positive electrode plates.

The non-chemically converted negative electrode plate is housed into a bag-shaped separator and stacked with the non-chemically converted positive electrode plate to form an electrode plate group. The electrode plate group was housed into a polypropylene container together with the electrolyte solution, and chemical conversion was performed in the container to prepare flooded-type lead-acid batteries A1 to A7 and B1 to B3. A sulfuric acid aqueous solution having a specific gravity of 1.28 at 20°C is used as the electrolyte solution.

### [Evaluation 1: Life performance]

The life performance of a once fully charged lead-acid battery is evaluated according to the procedure described above. The life performance is expressed as a ratio (%) when the result of lead-acid battery B1 is 100.

Table 1 shows the results of the lead-acid batteries A1 to A7 and B1 to B3.

**[Table 1]**

| Battery | R1 (%) | R2 (%) | Life Performance (%) |
|---|---|---|---|
| B1 | 25 | 50 | 100 |
| B2 | 21 | 50 | 115 |
| B3 | 25 | 42 | 190 |
| A1 | 21 | 42 | 226 |
| A2 | 15 | 42 | 227 |
| A3 | 10 | 42 | 227 |
| A4 | 21 | 38 | 241 |
| A5 | 21 | 35 | 244 |
| A6 | 21 | 30 | 235 |
| A7 | 21 | 15 | 215 |

As shown in Table 1, the batteries A1 to A7 in which the percentage R1 is less than 25% and the percentage R2 is less than 50% can obtain high life performance even when the charge-discharge cycle including overcharge is repeated.

On the other hand, the battery B1 in which both the percentages R1 and R2 are out of the above ranges has a life performance of 100%, and the batteries B2 and B3 in which one of percentages is out of the range has a life performance of 115% and 190%. From these results, the life performance is expected to be 205% when the percentages R1 and R2 are in the above ranges. In contrast, in the batteries A1 to A7, a high life performance of 215 to 244% is actually obtained, which is 10 to 39% higher than the expected value of 205%.

In the batteries A1 to A7, the remarkably high life performance can be obtained because, as described above, by controlling the percentage R1 of the 2A portion and the percentage R2 of the second portion in the longitudinal frame rib and the frame rib to the above ranges, respectively, the degree of progress of corrosion during overcharge is made uniform throughout the current collector. As a result, it is conceivable that the elongation of the current collector during overcharge was reduced, and the falling-off of the positive electrode material was prevented.

### INDUSTRIAL APPLICABILITY

The lead-acid battery according to the above aspect of the present invention can be applied to a valve regulated lead-acid battery and a flooded-type lead-acid battery and can be suitably used as a power source for starting a vehicle (automobile, motorcycle, etc.) or a power source for an industrial power storage apparatus such as an electric vehicle (forklift, etc.). The lead-acid battery is particularly suitable for a flooded-type battery and is particularly suitable for a power source for starting a vehicle, which is easily exposed to an overcharged state.

### DESCRIPTION OF REFERENCE SIGNS

1: lead-acid battery
2: negative electrode plate
3: positive electrode plate
4: separator
5: positive electrode shelf
6: negative electrode shelf
7: positive electrode pole
8: through-connector
9: negative electrode pole

11: electrode plate group
12: container
13: partition
14: cell chamber
15: lid
16: negative electrode terminal
17: positive electrode terminal
18: vent plug
100A, 100B: current collector
110: frame rib
111: upper element
112: lower element
113, 114: side element
120: inner rib
120A: longitudinal rib
120B: transverse rib
130: lug
132: lower protrusion (foot)
210: first portion of longitudinal rib
220: second portion of longitudinal rib
F1, F2: longitudinal frame rib
C1: first cross-section
C2: second cross-section
m1: electrode material
p1: first portion
p2A: 2A portion
p2B: 2B portion

## Claims

1. A lead-acid battery comprising:
a positive electrode plate;
a negative electrode plate; and
an electrolyte solution,
wherein at least one electrode plate selected from the group consisting of the positive electrode plate and the negative electrode plate includes a current collector and an electrode material held by the current collector,
the current collector has a frame rib, a lug provided on the frame rib, and inner ribs inside the frame rib,
the frame rib includes an upper element continuous with the lug, a lower element facing the upper element, and a pair of side elements coupling the upper element with the lower element,
the inner ribs include a longitudinal rib extending in a first direction from the upper element toward the lower element, and a transverse rib extending in a second direction from one of the side elements toward the other of the side elements,
a striped pattern of a metallic fibrous structure is seen in each of a first cross-section perpendicular to the first direction of the side element of the frame rib and a second cross-section perpendicular to the first direction of the longitudinal rib,
an outer peripheral region of the first cross-section is made up of a first portion in which the fibrous structure extends along a contour of the first cross-section and a second portion except for the first portion,
the second portion is made up of a 2A portion disposed inside the frame rib and a 2B portion disposed outside the frame rib,
an outer peripheral region of the second cross-section is made up of a first portion in which the fibrous structure extends along a contour of the second cross-section and a second portion except for the first portion,
a percentage R1 of a length of a contour corresponding to the 2A portion to a total length of the contour of the first cross-section is less than 25%, and
a percentage R2 of a length of a contour corresponding to the second portion to a total length of the contour of the second cross-section is less than 50%.

2. The lead-acid battery according to claim 1, wherein the percentage R1 is 21% or less.

3. The lead-acid battery according to claim 1 or 2, wherein the percentage R1 is 5% or more.

4. The lead-acid battery according to claim 1 or 2, wherein the percentage R1 is 10% or more.

5. The lead-acid battery according to claim 1, wherein the percentage R1 is 5% or more and less than 25%.

6. The lead-acid battery according to any one of claims 1 to 5, wherein the percentage R2 is 45% or less.

7. The lead-acid battery according to any one of claims 1 to 6, wherein the percentage R2 is 42% or less.

8. The lead-acid battery according to any one of claims 1 to 7, wherein the percentage R2 is 5% or more.

9. The lead-acid battery according to any one of claims 1 to 8, wherein the percentage R2 is 10% or more.

10. The lead-acid battery according to any one of claims 1 to 9, wherein the percentage R2 is 15% or more.

11. The lead-acid battery according to claim 1, wherein the percentage R2 is 5% or more and less than 50%.

12. The lead-acid battery according to any one of claims 1 to 11, wherein at least the positive electrode plate includes the current collector.

13. The lead-acid battery according to any one of claims 1 to 12, wherein
the first cross-section is hexagonal, and
the second cross-section is octagonal.

14. The lead-acid battery according to any one of claims 1 to 13, wherein the current collector is a current collector punched out of a stretched sheet of lead or a lead alloy.

15. The lead-acid battery according to claim 14, wherein the total length WLH of inner dimensions of the longitudinal rib of the current collector and the total length WLW of the inner dimensions of the transverse rib of the current collector satisfy WLH/WLW ≥ 0.8.

16. The lead-acid battery according to any one of claims 1 to 15, which is used for starting an engine of a vehicle.

17. The lead-acid battery according to any one of claims 1 to 16, which is disposed in the engine room of a vehicle.

18. The lead-acid battery according to any one of claims 1 to 17, wherein a thickness of the first portion in the second cross-section is 55 µm or more.

19. The lead-acid battery according to any one of claims 1 to 18, wherein the thickness of the first portion in the first cross-section is 55 µm or more.

20. The lead-acid battery according to any one of claims 1 to 19, wherein a density of the electrode material of the positive electrode plate is 3.6 g/cm³ or more and 4.8 g/cm³ or less.

21. A method for manufacturing the lead-acid battery according to any one of claims 1 to 7, the method comprising the steps of:
preparing the current collector; and
obtaining at least one electrode plate selected from the group consisting of the positive electrode plate and the negative electrode plate each including the current collector and the electrode material held by the current collector,
wherein the step of preparing the current collector includes the steps of preparing a rolled plate,
punching the rolled plate to form an intermediate grid body having an intermediate frame rib and a plurality of intermediate ribs formed in a grid shape inside the intermediate frame rib, and
pressing the intermediate grid body from a thickness direction of the intermediate grid body to form at least a part of the frame rib and at least some of the inner ribs, and
the pressing includes
deforming at least a part of the intermediate frame rib so that at least an inner end of the intermediate frame rib in a first rib width direction intersecting an extending direction of the intermediate frame rib is thinner than a center in the first rib width direction and that the percentage R1 is less than 25%, and
deforming at least some of the plurality of intermediate ribs so that at least one end in a second rib width direction intersecting an extending direction of the intermediate ribs is thinner than a center in the second rib width direction and that the percentage R2 is less than 50%.
